# FASCICULE DE BREVET EUROPEEN

(11) **EP 0 934 911 B1**
(45) Date de publication et mention de la délivrance du brevet: **21.11.2001**
(21) Numéro de dépôt: 99830026.3
(22) Date de dépôt: 25.01.1999
(51) Int. Cl.: C03C 17/00, C03C 17/02, C03C 8/14

(54) **Procédé industriel de coloration du verre par fixage et concentration superficielle d'oxydes colorants**
Herstellungsverfahren zum Einfärben von Glas durch Fixierung eines oxidischen Farbstoffes und dessen anschliessender Aufkonzentrierung and der Oberfläche
Colouring of glass on an industrial scale involving fixing of an oxide colourantand then concentrating it on the surface

(30) Priorité: 29.01.1998 IT SA980002
(43) Date de publication de la demande: 11.08.1999
(73) Titulaire: Langella, Francesco, 84135 Salerno (IT)
(72) Inventeur: Langella, Francesco, 84135 Salerno (IT)

(56) Documents cités:
- DE-A- 4 013 253
- US-A- 5 066 524
- US-A- 5 629 247
- LACZKA M ET AL: "CHROMIUM, COBALT, NICKEL AND COPPER AS PIGMENTS OF SOL-GEL GLASSES" JOURNAL OF ALLOYS AND COMPOUNDS, vol. 218, no. 1, 15 février 1995 (1995-02-15), pages 77-85, XP000489951
- CHEMICAL ABSTRACTS, vol. 108, no. 13, 28 mars 1988 (1988-03-28) Columbus, Ohio, US; abstract no. 108:225765b, SZURMAN J: "METHOD FOR PRODUCING DECORATIVE PATTERNS ON GLASS PLATES" XP002108710 & PL 140 672 A (SZURMAN) 30 mai 1987 (1987-05-30)

## Description

### Domaine technique

Cette invention a pour objet des moyens et une technique de coloration superficielle du verre de type économique à accoupler, par fusion du verre, à verre transparent économique, au moyen d'impression sérigraphique, ou d'un autre processus, d'une composition colorante vitrifiable et transparente dont la température est proche de celle de la fusion du verre.

### Etat de la technique

Comme chacun sait, pour la réalisation de produits manufacturés par fusion du verre on utilise des verres spéciaux déjà colorés, obtenus en mélangeant intimement des minéraux adéquats dans la pâte vitrifiable. La coloration par introduction d'oxydes colorants dans le verre blanc imprimé est effectuée aussi bien par voie directe qu'indirecte. Dans le premier cas, les oxydes colorants entrent dans le verre, pendant le processus de fusion, en tant que composants du verre avec les autres oxydes composants normaux, en solution transparente; dans le deuxième cas, les substances colorantes se trouvent dans le verre dans une forme élémentaire subdivisées en de très petites et ultramicroscopiques particules, spécifiquement en solution colloïdale.

Pour obtenir la subdivision requise, un chauffage successif se rend souvent nécessaire, et parfois des chauffages successifs et répétés du verre refroidi, c'est la coloration par chauffage. Toutes les deux techniques susmentionnées ont la caractéristique de colorer le verre dans toutes ses parties. (Felice Franceschini «Il vetro - Trattato di tecnologia vetraria», édité chez Hoepli, Milan).

Les inconvénients de ces procédés qui sont utilisés à présent pour la production de verre imprimé coloré sont indiqués ci-dessous:
gestion de grandes quantités de verre produit pour chaque couleur:
l'installation de fabrication du verre coloré imprimé n'étant pas versatile dans le passage d'une coloration à l'autre, les maisons productrices de ce verre sont obligées à produire de très grandes quantités de verres qui sont stockés pour de longues périodes;
production de verre coloré de transition (décoloré), s'obtenant dans le passage de la production de verre d'une couleur à l'autre, ce qui fait augmenter énormément le coût de production;
gamme limitée de coloration;
incompatibilité des verres de couleurs différentes dans la production de produits manufacturés avec la technique de la fusion du verre, les compositions chimiques des oxydes composants étant différentes (par exemple, un verre vert présente une composition chimique totalement différente par rapport à celle du verre incolore ou du verre bleu ou jaune).

L'utilisation de ces types de verre, dans le processus de production par fusion pour composer, par exemple, des vitrages et différents produits, résulte cher parce qu'ils ne doivent être accouplés qu'avec le verre transparent du même type. En effet, pour accoupler par fusion des portions de verres colorés, découpés et profilés différemment sur un support constitué d'une feuille de verre transparent, il est nécessaire que chaque verre ait le même coefficient de dilatation afin d'éviter la création, dans le processus de fusion et successif refroidissement, de tensions dans le verre entraînant la probable rupture de la pièce finie.

On connaît d'autres techniques de coloration du verre qui utilisent des verres transparents, colorés par immersion dans un bain ou bien par coulée ou, plus fréquemment, en étendant, avec pinceau ou plus facilement par aspersion, un voile de couleur sur la surface du verre. Malheuresement ces techniques ne permettent pas d'obtenir des tonalités de couleurs constantes pour chaque cycle d'usinage des feuilles et, en plus, il n'est pas possible de stocker les verres préalablement colorés.

Une autre technique que nous appliquions dans les années 1994-1995 est la coloration superficielle du verre par utilisation de décalcomanies. Cette technique, même si elle obtient des résultats satisfaisants du point de vue de la réalisation du verre coloré, a été abandonnée à cause de son caractère onéreux, puisqu'il faut d'abord former la couche d'oxydes colorants sur un support de papier et puis la transférer sur le verre. Ce support de papier, en plus, présentait des difficultés de stockage, si ce n'était avec des modes et un environnement opportuns. En fait, les feuilles superposées, au fil des jours, se collaient aisément entre elles ou se détérioraient devenant inutilisables. Un autre grave inconvénient se produisait lorsque le verre à colorer par application de décalcomanies était introduit dans le four de cuite, entraînant l'émission de gaz brûlés, généralement toxiques, dérivant de la volatilisation du collodion et des liants chimiques des décalcomanies, difficiles à évacuer dans les fours électriques utilisés dans la technique de la fusion du verre.

### Buts et avantages de l'invention

Le but de cette invention est d'obvier à tous les inconvénients des techniques précédentes et de proposer une technique permettant de séparer le concept de fusion et laminage de la pâte vitreuse pour la production de verre plat transparent de celui de coloration du verre et, au même temps, de proposer une technique garantissant convenablement des résultats meilleurs et qui donne la possibilité à la maison productrice de verre imprimé coloré de produire uniquement du verre incolore, à colorer après, de façon à réduire au minimum les coûts de production.

Un autre objectif de cette invention, en accord avec le précédent, est de concevoir une technique qui donne la possibilité de concentrer dans la partie superficielle du verre une quantité d'oxyde colorant permettant d'obtenir des résultats chromatiques semblables à ceux des verres colorés en pâte, et donc d'appliquer ce procédé en aval des grandes installations de fusion et laminage du verre, avec de gros avantages aussi bien du point de vue économique que de la flexibilité de production, en particulier afin d'atteindre les avantages suivants:
versatilité de l'installation, tant dans la possibilité d'obtenir une vaste gamme de verres colorés, que dans la facilité de passage de la production du verre d'une couleur à l'autre, évitant ainsi de contaminer les bassins de fusion avec des pâtes vitreuses colorées qui comportent des coûts énormes dans la conversion de la production d'une couleur à l'autre;
aucune production de verre décoloré ou de transition;
bas coûts de gestion des stocks;
absence de problèmes d'incompatibilité dans le processus de fusion du verre, dans l'assemblage de feuilles de verre de plusieurs couleurs puisque, au moyen de la coloration superficielle, objet de cette invention-ci, la composition des oxydes normaux composant la masse vitreuse n'est pas altérée (par exemple, un verre jaune a la même composition chimique que le verre vert et le verre bleu, etc.).

Un autre but de cette invention est de concevoir un procédé de coloration du verre plat pouvant être appliqué non seulement dans des processus continus mais aussi dans des processus de type discontinu et pour de petites productions, étant donné qu'il peut être appliqué de façon indépendante sur chaque feuille de verre.

Les buts et les avantages susdécrits sont atteints au moyen d'une technique de coloration du verre plat, par fixage et concentration sur une surface du verre d'une couche fine de pâte amalgamée constituée d'oxydes colorants et de fondants appropriés, vitrifiables à la température de ramollissement ou, en bref, de fusion superficielle du verre.

Cette invention met également à disposition un procédé de préparation des compositions de couleurs utilisées pour la coloration du verre ayant les qualités nécessaires (à savoir la possibilité d'être vernies et donc fixées sur le verre avec une cuite préventive à presque 500°C, selon l'oxyde colorant utilisé, et de devenir vitrifiables et transparentes à la température de fusion superficielle du verre, c'est-à-dire 600-800°C environ).

### Description des dessins

Les buts et les avantages de la technique de coloration du verre au moyen du fixage et concentration superficielle d'oxydes colorants, objet de cette invention-ci, seront mieux compris et appréciés sur la base de la description détaillée présentée ci-dessous, avec référence aussi aux dessins ci-joints dans lesquels, schématiquement:
la fig. 1 montre, dans une vue partielle et transversale, un verre coloré en pâte.
la fig. 2 montre, dans une vue partielle et transversale, un verre coloré selon les principes de cette invention
la fig. 3 montre, dans une vue 3D, plusieurs systèmes d'application industrielle du vernissage sur verre laminé, selon cette invention.

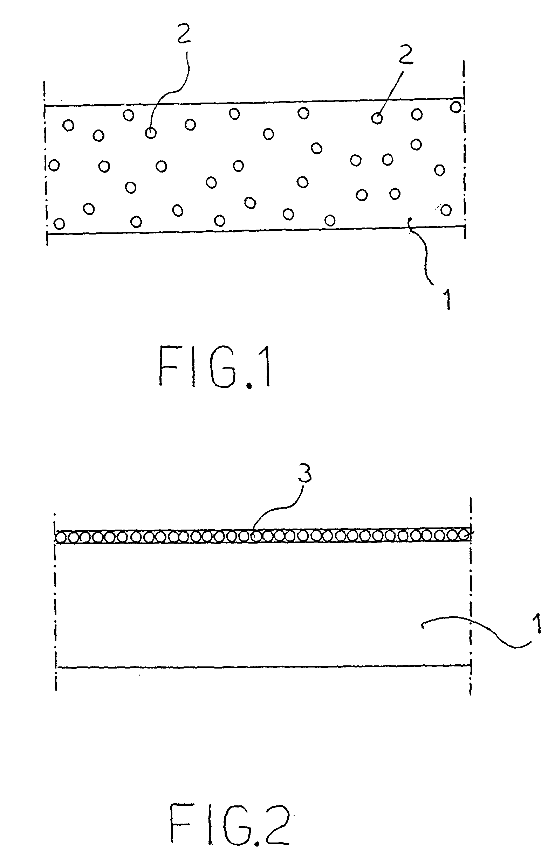

Avec référence à la fig. 1, on a indiqué un typique verre coloré au moyen de la technique d'inclusion homogène de minéraux appropriés dans la pâte vitrifiable; avec (1) on a indiqué une portion transversale (épaisseur) d'une feuille de verre, avec (2) les inclusions d'oxydes colorants dans la pâte vitreuse composant le verre.

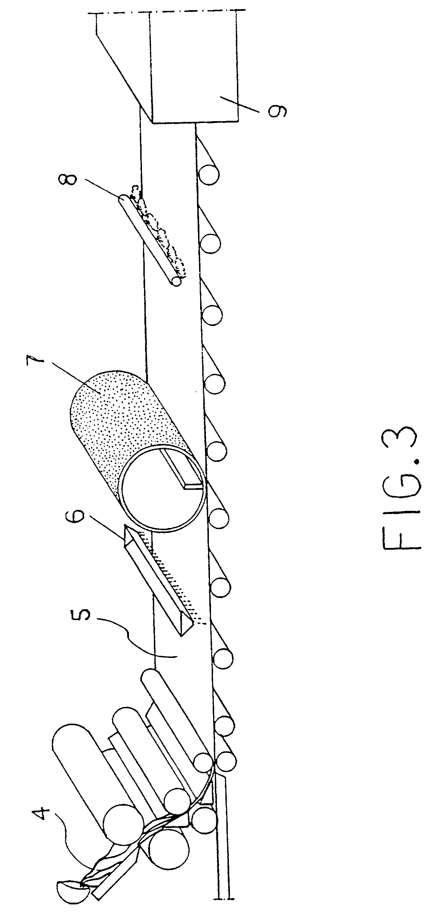

La fig. 2, au contraire, montre schématiquement un typique verre coloré selon la technique de cette invention; dans ce cas, on voit que les particules colorantes (3) sont fixées et concentrées toutes sur une surface du verre.

La fig. 3 montre divers systèmes d'application du mélange colorant, selon cette invention-ci, en aval d'installations continues de laminage du verre; avec (4) on a indiqué le verre fondu qui est d'abord laminé (5), ensuite verni, selon les nécessités, avec un ou plusieurs systèmes habituels, en particulier par application d'un voile de couleur (6); sérigraphie (7); vernissage au pistolet (8).

Avec (9) on a indiqué un four de recuit où le verre verni prend une coloration indélébile.

### Mode d'emploi de l'invention

### Préparation du mélange colorant.

Selon le verre coloré que l'on désire obtenir, on prépare la composition constituée d'oxydes colorants et fondants cristallins, en mélangeant et triturant finement le tout.

L'oxyde colorant, souvent d'origine métallique, aura la caractéristique de développer dans le mélange la couleur souhaitée. Elle sera présente dans une quantité telle à obtenir un résultat chromatique plus ou moins accentué selon les nécessités. L'oxyde est fondu avec des fondants adaptés à atteindre l'effet souhaité.

Les fondants, presque souvent d'origine plombique et alcaline, sont dérivés de roche. Ils fondent l'oxyde colorant au moment du recuit du verre en le piégeant et donc en formant une couche subtile et uniforme de matière vitreuse colorée, d'une façon si intense à obtenir la couleur souhaitée, semblable à celle obtenue de la coloration en pâte du verre.

Les fondentss caractérisent même la tonalité de la couleur du verre à parité d'oxyde colorant.

Exemples: pour obtenir un verre rose on utilisera un fondant à base alcaline dans une solution de précipité d'or; pour obtenir un verre pourpre on utilisera, dans la même solution, un fondant à base plombique. Donc la tonalité de la couleur est modifiée selon la nature du fondant utilisé. La nature du fondant, en outre, caractérise la propriété du mélange, à savoir sa transparence et son opacité.

Par exemple, pour obtenir un verre bleu on mélange:
- Oxyde de cobalt;
- Silice;
- Carbonate de plomb (fondant).

Les oxydes et les fondants sont amalgamés au moyen d'un véhicule huilleux, pour obtenir une solution plus ou moins dense permettant une application uniforme sur la surface de la feuille de verre. Ce véhicule huilleux a, en plus, la caractéristique d'évaporer pendant la phase de recuit du verre et fixage de la couleur, laissant inaltérée la composition du mélange des oxydes. En bref, le véhicule huilleux permet de distribuer uniformément le mélange colorant sur la surface de verre à colorer.

### Application de la pâte colorante sur le verre.

L'application du mélange colorant sur le verre peut être effectuée de plusieurs manières:
par procédé sérigraphique;
par application d'un voile de couleur;
par vernissage au pistolet.

Ces systèmes d'application sont choisis opportunément, pour une meilleure réussite du produit final, selon la nature du mélange colorant à utiliser, l'intensité de la couleur à obtenir et la position de l'installation.

Exemples: pour obtenir un verre bleu clair on utilisera un mélange composé d'oxyde de cobalt et fondants alcalins en solution, appliqué par un procédé de vernissage au pistolet;
pour obtenir un verre vert émeraude on utilisera un mélange d'oxyde de cuivre et fondants plombiques en solution très pâteuse, donc applicable par sérigraphie à rouleau (procédé continu); application d'une voile de couleur (procédé continu) ou table sérigraphique (procédé discontinu), puisque la quantité de matière colorante devra être supérieure à celle décrite pour obtenir le verre de couleur bleu clair.

### Cuite du verre et fixage de la couleur.

Après l'application du mélange colorant sur le verre incolore, le tout est inséré dans un four de cuite où le mélange, du fait du chauffage, est fixé à la surface du verre à une température allant de 400°C à 700°C environ, selon le type de four et la couleur que l'on veut obtenir.

Pendant la phase de chauffage du composé verre-mélange colorant, les réactions suivantes sont entraînées: évaporation du véhicule huilleux (300°C environ); réaction entre fondant et oxyde, provoquant la stratification uniforme d'un film vitreux de couleur opaque, qui se fond on fixe avec le verre incolore, obtenant ainsi une feuille monolithique colorée. Après ce traitement, le verre coloré superficiellement aura les caractéristiques technico-qualitatives équivalentes ou supérieures aux verres colorés en pâte, permettant tous les procédés d'usinage sur verre: découpage, meulage, biseautage, trempe, cintrage et fusion.

Exemple de processus de production discontinu d'un verre float coloré avec table sérigraphique: tout d'abord on prépare le mélange vernissant en mélangeant l'oxyde colorant, résistant à des températures de 800°C environ, avec le fondant minéral et en les triturant finement; ensuite, ces substances sont mélangées avec l'huile sérigraphique à l'intérieur d'un mélangeur, pour presque 15 minutes, de façon à rendre le composé fluide pour pouvoir être utilisé avec le châssis sérigraphique; après cela, le verre, qui devra être coloré, est soigneusement dégraissé et après l'avoir essuyé, il est placé sous le châssis sérigraphique. Après, on met en marche le châssis, qui peut être à glissement manuel ou automatique, sur lequel, préalablement, on aura aménagé la peinture préparée comme décrit ci-dessus, l'étendant uniformément sur le verre situé au-dessous. Il est important que cette opération de vernissage soit effectuée dans un environnement sans poussière, afin d'éviter des dépôts de poussières sur la peinture fraîche. Le verre ainsi verni est ensuite placé dans un four de cuite, où il atteint une température comprise entre 400 et 700°C, selon la qualité de l'oxyde colorant utilisé (par exemple, le bleu de cobalt se fixe à 600°C environ, tandis que le vert cuivre à 580°C environ). Après la cuite, le résultat obtenu sera un verre float verni de façon indélébile, avec possibilité d'être stocké, façonné par découpage et utilisé dans le processus de fusion du verre sur une base transparente float pour la production de vitrages artistiques et d'autres produits manufacturés, avec des résultats chromatiques toujours constants d'un cycle de production à l'autre. Dans tous les cas examinés, les verres produits présentent des colorations durables dans le temps, et une fois recuits avec des caractéristiques chromatiques surprenantes en termes de brillance et intensité de couleur.

Comme l'on peut comprendre, la technique de cette invention atteint avantageusement les objectifs fixés permettant une considérable simplification des opérations demandées par rapport à la technique habituelle de coloration du verre en pâte avec une évidente diminution substantielle des coûts de production.

## Revendications

1. Technique de coloration du verre plat de type économique, selon laquelle, au moyen d'un procédé sérigraphique quelconque, à chassis ou à rouleau, ou par procédé au pistolet ou par application d'un voile de couleur, on étend, sur l'une des faces du verre, une couche très fine de pâte amalgamée par l'adjonction d'un véhicule huilleux d'oxydes colorants et de fondants appropriés, **caractérisée par le fait que**, après l'application, elle se fixe sur le support de verre de facon indélébile, se concentrant uniformément dans une couleur opaque, par chauffage dans un four de précuite à une température de 500°C, selon l'oxyde colorant utilisé, et ensuite par chauffage dans un four de recuit jusqu'à atteindre une température proche de celle de fusion ou de ramollissement du verre, comprise entre 600 et 800°C environ, de facon que la couche de pate colorante, fixée superficiellement sur une face du verre, vetrifie et se rende transparente sans altérer la composition des oxydes normaux qui composent la masse vitreuse située au-dessous de la feuille de verre .

2. Technique de coloration du verre, d'après la revendication 1 ) selon laquelle les verres économiques colorés résultent compatibles entre eux et avec les verres économiques incolores de support dans le procèdè industriel de la fusion du verre.

3. Technique de coloration du verre, d'après les revendications précédentes, **caractérisée par le fait qu'**elle peut être appliquée tant en aval des grandes installations continues de fusion et laminage du verre, qu'en des processus de type discontinu et pour de petites productions, pouvant être utilisée de facon indépendante sur chaque feuille de verre .

## Patentansprüche

1. Technik der Farbgebung bei einfachem Flachglas, gemäß der mit einem Rahmen- oder Rollen-Siebdruckverfahren oder mittels Sprüh- oder Lasurverfahren auf einer Seite des Glases eine dünne Schicht einer Paste aufgetragen wird, die gut mit einem ölhaltigen Träger färbender Oxide und entsprechender Flussmittel amalgamiert ist. Diese Paste ist **dadurch gekennzeichnet, dass** sie nach besagter Anwendung auf dem Glasträger unauslöschlich fixiert wird, indem sie sich gleichmäßig in einer matten Farbe durch Erhitzung in einem Voreinbrennofen bei einer Temperatur von ca. 500° je nach verwendetem Farboxid verdichtet. Sie wird dann in einem Glühofen bis zum Erreichen einer Temperatur nahe der Schmelztemperatur oder der Erweichung des Glases zwischen ca. 600 und 800 Grad erhitzt, so dass die Farbpastenschicht, die auf der Oberfläche einer Glasseite angebracht worden ist, verglast und durchsichtig wird, ohne die Zusammensetzung der normalen Oxide zu verändern, die die darunterliegende Glasmasse der Glasplatte bilden.

2. Technik der Farbgebung des Glases wie nach Anspruch 1), gemäß der die einfachen gefärbten Gläser sowohl untereinander als auch mit einfachen farblosen Träger-Gläsern im industriellen Glasschmelz-Verfahren kompatibel sind.

3. Technik der Farbgebung des Glases wie nach den vorhergehenden Ansprüchen, die **dadurch gekennzeichnet** wird, dass sie sowohl am Ende der großen kontinuierlichen Glasschmelzungs- und -walzungsanlagen, als auch bei Verfahren diskontinuierlichen Typs und für kleine Produktionen angewandt werden kann, da sie unabhängig bei den einzelnen Glasplatten verwendet werden kann.

## Claims

1. Colouring technology of the cheap flat glass according to by any serigraphic procedure in frame or in roller, or by any procedure in spray or in veiling, you spread, on one of the surfaces of the glass, a thin layer of a well-mixed paste by an oil-solvent compound of colouring oxides and appropriated fluxes. The characteristic of this paste is that, after the application, it is indelibly fixed on the surface of the glass, concentrated uniformly in an opaque colour, by the heating in a pre-firing oven at the temperature of 500°C ca. depending on the colouring oxide used. The pre-fired glass is fired in the re-fired oven where the temperature gets to 600-800°C ca. (the fusion or softening temperature of the glass). In this way the colouring paste layer, previously fixed on a surface of the glass, vetrifies and it become transparent without change the composition of the oxides that makes up the vitreous lump of the glass.

2. Colouring technology of the glass like the claim n.I) according to the cheap glasses are compatible both among them and with colourless cheap glasses that are the support in the industrial procedure of the glass fusion (fusing).

3. Colouring technology of the glass like the preceding claims based on the fact that can be applied both in the valley of the large continuous plants for fusing and lamination of the glass and in the discontinuous procedures and for small productions, so it can be used indipendently on single sheets of glass.
